# EUROPEAN PATENT APPLICATION

(11) **EP 1 453 212 A2**
(43) Date of publication of application: **01.09.2004**
(21) Application number: 04002587.6
(22) Date of filing: 05.02.2004
(51) Int. Cl.: H04B 1/16, H04B 1/38

(54) **Electronic apparatus and system control method for the electronic apparatus**

(30) Priority: 28.02.2003 JP 2003053046
(71) Applicant: Kabushiki Kaisha Toshiba, Tokyo 105-8001 (JP)
(72) Inventor: Tomokazu, Yuasa, Minato-ku Tokyo 105-8001 (JP)
(74) Representative: Henkel, Feiler & Hänzel

(57) **Abstract**

When an automatic battery detector (101) detects that the remaining capacity of a battery has become lower than a predetermined value, a central processing controller (100) lengthens the continuous operation time by reducing power consumption. The central processing controller (100) controls a radio communication device (107) to switch the operation mode from class 2 to class 3. Class 2 provides a high output level, and class 3 provides a low output level. Alternatively or additionally, the central processing controller (100) controls a D/A conversion amplifier circuit (105) to turn off a Dolby system.

## Description

The present invention relates to an electronic apparatus which can be battery-driven and which is used for radio communications with another apparatus. The present invention also relates to a system control method for the electronic apparatus.

In recent years, Bluetooth(R) is drawing attention as a radio communication technology. Bluetooth(R) is a low-cost, low-power and short-range radio communication technology suitable for mobile apparatuses. It is used for connecting mobile information apparatuses owned by individual users. Since the apparatuses are connected in a wireless way, their connection is free and easy in comparison with the case where they are connected by means of physical lines.

As one type of mobile information apparatus using radio communications, an apparatus for wireless connection between a portable music player and a headphone is known. (Such an apparatus is disclosed in Jpn. Pat. Appln. KOKAI Publication No. 2002-112383, for example.) Since the technical specifications regarding Bluetooth(R) are standardized, even apparatuses made by different manufacturers can be connected together as long as the communications are based on the Bluetooth(R) standards.

The Bluetooth(R) standards include parts called profiles each of which is adapted for one application. The profiles concerning headsets include Advanced Audio Distribution Profile (A2DP) and Audio Video Remote Control Profile (AVRCP). A2DP provides a function of connecting headsets to portable music players and executing streaming of audio data (such as data on music) for the purpose of reproducing the data. AVRCP provides a function of remote-controlling of portable music players or the like.

A headset is an electronic apparatus that is independent from a portable music player and must therefore be driven on a battery. Hence, the system control of the headset has to be based on the remaining battery capacity. For example, Jpn. Pat. Appln. KOKAI Publication No. 2002-290320 discloses a Bluetooth(R) system wherein a mobile telephone and a handset are connected in a wireless manner. When one of these two detects that its battery is running short of capacity, it informs the other that it will enter into a power OFF mode or a sleep mode.

According to Jpn. Pat. Appln. KOKAI Publication No. 2002-290320, an ordinary operation is continued until the detection of the exhausted state of the battery. However, some users may think that a long operation time is more important than the quality of sound. In other words, a desirable system control may be to place a higher priority on the function when the remaining battery capacity is sufficient and on the power saving when the remaining battery becomes lower than a predetermined value. Such a system control was impossible in the case of the invention of KOKAI Publication No. 2002-290320.

The present invention has been made in consideration of the above circumstances, and the object of the invention is to provide an electronic device and a system control method which enables a long continuous operation time when driven on a battery.

According to an embodiment of the present invention, an electronic apparatus which can be driven by a battery and is configured to perform radio communications with another apparatus, characterized by comprises battery capacity detector for detecting a remaining capacity of the battery, a radio signal transmitter for transmitting a radio signal at one of a first output level and a second output level lower than the first output level, and a control device for switching the output level of the radio signal transmitted by the radio signal transmitter from the first output level to the second output level, when the remaining capacity of the battery detected by the battery capacity detector becomes lower than a predetermined value.

In accordance with other embodiments of the invention, there is provided an electronic apparatus which can be powered by a battery and is configured to perform radio communications with another apparatus, characterized by comprising: a battery capacity detector for detecting a remaining capacity of the battery; an audio data reproduction device for reproducing audio data with one of first sound quality and second sound quality lower than the first sound quality; and a control device for switching the sound quality of the audio data reproduced by the audio data reproduction device from the first sound quality to the second sound quality, when the remaining capacity of the battery detected by the battery capacity detector becomes lower than a predetermined value.

In accordance with other embodiments, there is provided a system control method for an electronic apparatus which can be driven by a battery and comprises a radio signal transmitter for transmitting a radio signal at one of a first output level and a second output level lower than the first output level, the system control method characterized by comprising the steps of: detecting a remaining capacity of the battery; and switching the output level of the radio signal transmitted by the radio signal transmitter from the first output level to the second output level, when the remaining capacity of the battery detected in the battery capacity detection step becomes lower than a predetermined value.

In yet another embodiment, there is provided a system control method for an electronic apparatus which can be powered by a battery and comprises an audio data reproduction device for reproducing audio data with one of first sound quality and second sound quality lower than the first sound quality, the system control method characterized by comprising the steps of: detecting a remaining capacity of the battery; and switching the sound quality of the audio data reproduced by the audio data reproduction device from the first sound quality to the second sound quality, when the remaining capacity of the battery detected in the battery capacity detection step becomes lower than a predetermined value.

With this structure, the power consumption can be reduced, and the continuous operation time can be lengthened.

As described above, the control according to the present invention enables a long continuous operation time in a battery driving mode.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram illustrating a radio communication system that employs an electronic apparatus according to one embodiment of the present invention.
FIG. 2 is a block diagram illustrating the configuration of a headset employed in the radio communication system of FIG. 1.
FIG. 3 is a block diagram illustrating the configuration of an audio player employed in the radio communication system of FIG. 1.
FIG. 4 illustrates the system configuration of a D/A conversion amplifier circuit of the headset of FIG. 2.
FIG. 5 is a flowchart illustrating the system control the headset of FIG. 2 executes.

An embodiment of the present will now be described with reference to the accompanying drawings.

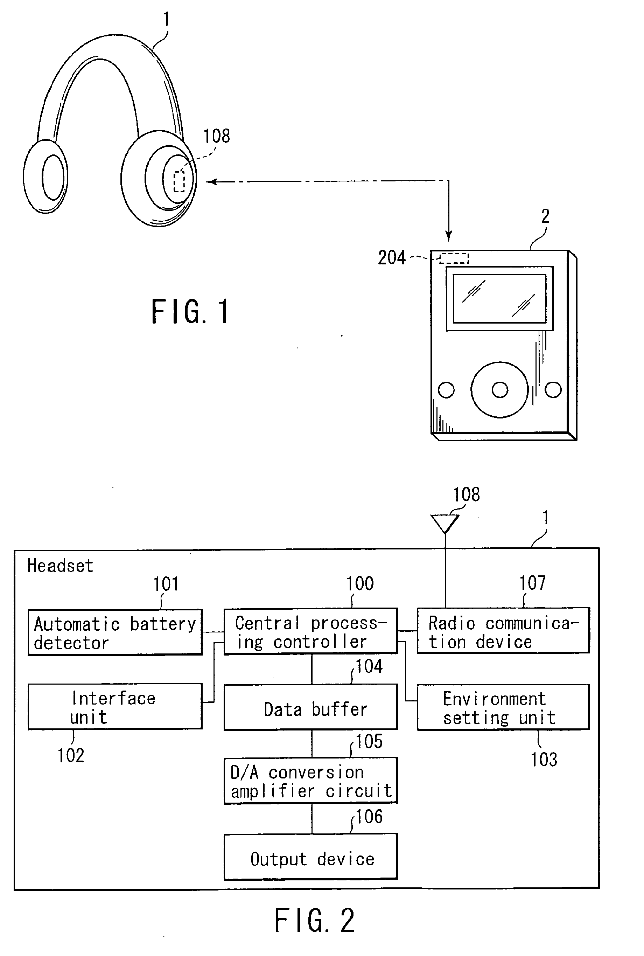

FIG. 1 shows an electronic apparatus which is according to one embodiment of the present invention and a radio communication system which uses that electronic apparatus. The electronic apparatus is specifically a headset wearable on the head of a user and provided with a radio communication function.

The headset 1 performs radio communications that conform to the Bluetooth(R) standards. This means that the headset 1 can communicate with various apparatuses as long as these apparatuses have radio communication functions that conform to the Bluetooth(R) standards. According to the Bluetooth(R) standards, the radio communication system is a master-slave system wherein a master is connected to slaves by wireless and performs radio communications with each of them. The headset 1 is provided with both the Sink function of Advanced Audio Distribution Profile (A2DP) and the CT function of Audio Video Remote Control Profile (AVRCP).

The Sink function of A2DP is a function that allows the headset 1 to serve as an apparatus to which audio data (e.g., music data) is transferred for streaming. The audio data is received as radio signals and simultaneously reproduced.

The CT function of AVRCP is a function that allows the headset 1 to serve as a controlling apparatus in remote control. Owing to this function, the headset 1 transmits a remote control signal (which is a radio signal) to an apparatus to be controlled.

Let us assume that the headset 1 performs radio communications with an audio player 2 having both the Source function of A2DP and the TG function of AVRCP.

The Source function of A2DP is a function that allows the audio player 2 to serve as a device which transfers audio data (e.g., music data) for streaming. The audio data is transmitted as radio signals. The audio player 2 transmits music data to the headset 1 through the wireless connection (link) established for A2DP.

The TG function of AVRCP is a function that allows the audio player 2 to serve as a controlled device in remote control. On the basis of a remote control signal (which is a radio signal) transmitted from the controlling device, the audio player 2 starts or stops streaming.

The headset 1 incorporates antenna 108 used for transmitting remote control signals to the audio player 2 and for receiving audio data transmitted from the audio player 2. On the other hand, the audio player 2 incorporates an antenna 204 used for transmitting audio data to the headset 1 and for receiving remote control signals transmitted from the audio player 2.

FIG. 2 illustrates the configuration of the headset 1.

As shown in FIG. 2, the headset 1 comprises a central processing controller 100, an automatic battery detector 101 for detecting remaining battery capacity, an interface unit 102, an environment setting unit 103, a data buffer 104, a D/A conversion amplifier circuit 105, an output device 106, a radio communication device 107, and an antenna 108.

The central processing controller 100 is a processor configured to control the operation of the headset 1. It controls the driving of each section by running an internally stored program. This program includes a routine for executing the Sink function of A2DP and a routine for executing the CT function of AVRCP.

The automatic battery detector 101 detects whether or not the remaining battery capacity has become lower than a predetermined value. If the remaining battery capacity is detected as being lower than the predetermined value, the automatic battery detector 101 notifies the central processing controller 100 of this state. The interface unit 102 controls the on/off state of a power supply and the state of a sound volume in accordance with how a switch is operated. The switch is provided at the ear pads of the headset 1. The environment setting unit 103 is used for determining the operation setting of the headset 1, including the selection of an operation mode to be described later. The data buffer 104 temporarily stores music data received from the audio player 2. The D/A conversion amplifier circuit 105 and the output device 106 convert digital information into analog information and perform processing to output Dolby surround sound. The Dolby surround sound is output from the loudspeakers built in the ear pads of the headset 1.

The radio communication device 107 is a device that executes the radio communications with the audio player 2 by following steps conformable to the Bluetooth(R) standards. The radio communication device 107 is provided with a base band processing section and an RF section. The radio communication device 107 is used for receiving audio data (such as music data) which the audio player 2 transmits as a radio signal, and for transmitting remote control signals (which are radio signals) to the audio player 2.

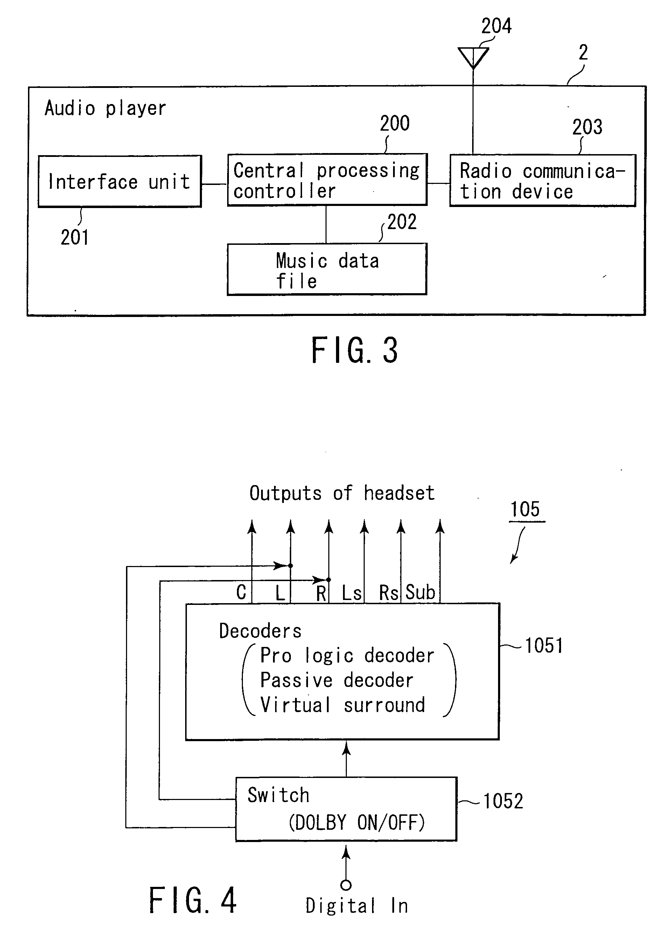

FIG. 3 illustrates the configuration of the audio player 2.

As shown in FIG. 3, the audio player 2 comprises a central processing controller 200, an interface unit 201, a music data file 202, a radio communication device 203 and an antenna 204.

The central processing controller 200 is a processor configured to control the operation of the audio player 2. It controls the driving of each section by running an internally stored program. This program includes a routine for executing the Source function of A2DP and a routine for executing the TG function of AVRCP.

The interface unit 201 includes a display monitor, a keyboard, a pointing device, etc. It is used for selecting audio data to be reproduced, and for instructing the start and stop of the reproduction of audio data and other modes.

The music data file 202 stores streams of audio data (such as music data) to be transmitted to the headset 1 for streaming.

The radio communication device 203 is a device that executes radio communications with the headset 1 by following steps conformable to the Bluetooth(R) standards. The radio communication device 203 is provided with a base band processing section and an RF section. The radio communication device 203 is used for transmitting audio data (such as music data) to the headset 1 as radio signals, and for receiving remote control signals which the headset 1 transmits as radio signals.

When the headset 1 and the audio player 2 described above are connected by wireless, the headset 1 can receive music data which the audio player 2 transmits through the A2DP connection for streaming, and can transmit remote control signals to the audio player 2 through the AVRCP connection.

As described above, the headset 1 performs radio communications with the audio player 2 on the basis of Bluetooth(R). Therefore, the radio communication device 107 of the headset 1 is configured to receive radio signals by using any of the classes determined by the Bluetooth(R) technology, i.e., at any of output levels. The D/A conversion amplifier circuit 105 is configured to enable switching between two modes: a mode in which outputs of the headset 1 are reproduced as 5. 1ch sound after being converted into Dolby surround sound; and a mode in which outputs of the headset 1 are reproduced as 2ch sound without conversion. FIG. 4 illustrates the system configuration the D/A conversion amplifier circuit 105 incorporates for the mode switching. On the basis of an externally-input control signal, a switch 1052 controls whether or not audio data should be supplied to a decoder 1051, which converts input audio data into Dolby sound data.

Until the time when the automatic battery detector 101 detects that the remaining battery capacity has become lower than a predetermined value, the radio communication device 107 of the headset 1 keeps using class 2 and the D/A conversion amplifier circuit 105 keeps executing data conversion to produce Dolby sound data. When the automatic battery detector 101 has detected that the remaining battery capacity is lower than the predetermined value, the headset 1 operates in one of the four modes below, depending upon how the radio communication device 107 and the D/A conversion amplifier circuit 105 should operate. The mode selection is made by the user, and the environment setting unit 103 manages the results of selection.
(1) Type A: Continue to use the Dolby system, and maintain class 2 as the communication mode.
(2) Type B: Continue to use the Dolby system, and switch the communication mode to class 3.
(3) Type C: Turn off the Dolby system, and maintain class 2 as the communication mode.
(4) Type D: Turn off the Dolby system, and switch the communication mode to class 3.

In the Bluetooth(R) standards, class 2 covers a range of up to 10 meters or so when the output level is somewhere between 0.25 mW and 2.5 mW (4 dBm), and class 3 covers a range of about several meters when the output level is not more than 1 mW (0 dBm). The switching from class 2 to class 3 is disadvantageous in that the wireless connection (link) between the headset 1 and the audio player 2 is likely to be degraded. Nevertheless, the power consumption can be reduced, and the continuous operation time can be lengthened.

Turning off the Dolby system may have negative effects on the sound quality, but the power consumption can be reduced, and the continuous operation time can be lengthened. In addition, if the sound quality is degraded, the user is thereby informed that the battery capacity is running short, with no need to sound beeps.

As can be understood from the above, the headset 1 provides the operation mode of type A for those users who want to maintain class 2 without lengthening the continuous operation time even when the battery capacity is running short, and who attach importance to high sound quality as well. The headset 1 also provides three operation modes of types B, C and D for those users who want to lengthen the continuous operation time. When the operation mode of type B is selected, the communication mode is switched from class 2 to class 3. When the operation mode of type C is selected, the sound quality is degraded. When the operation mode of type D is selected, the communication mode is switched from class 2 to class 3 and simultaneously the sound quality is degraded.

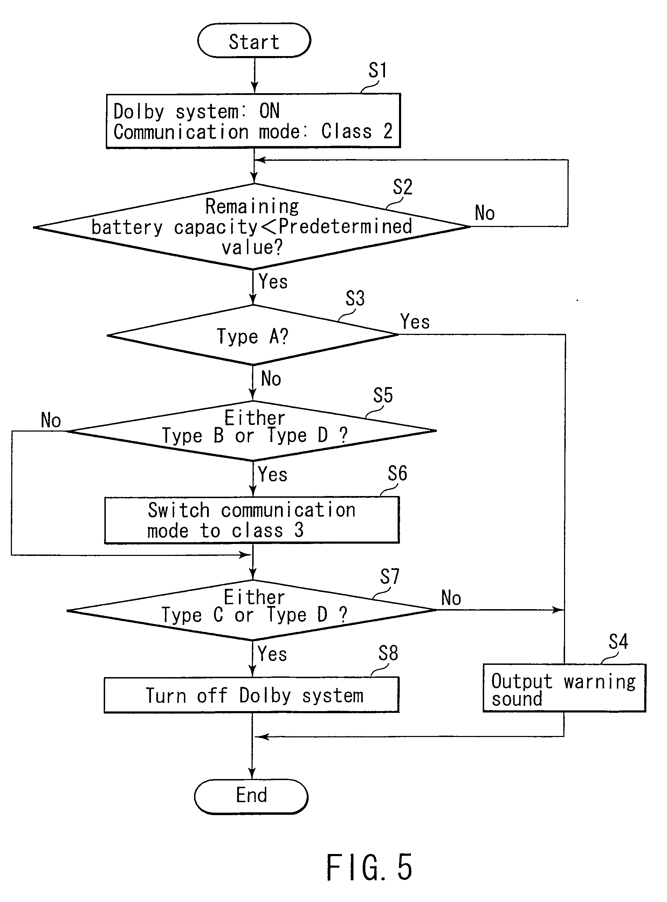

FIG. 5 illustrates the operating principles underlying the system control the headset 1 executes; it is a flowchart showing how the headset 1 executes system control.

First of all, the central processing controller 100 of the headset 1 controls the D/A conversion amplifier circuit 105 to turn on the Dolby system. In addition, the central processing controller 100 informs the radio communication device 107 that class 2 should be used as the communication mode (Step S1). Furthermore, the central processing controller 100 monitors the automatic battery detector 101 to see whether this detector detects that the remaining battery capacity is less than the predetermined value (Step S2). If this state is detected ("YES" in Step S2), a check is made to see whether or not the operation mode is type A (Step S3).

Where the operation mode is type A ("YES" in Step S3), the central processing controller 100 does not switch communication modes or turn off the Dolby system. Instead, the central processing controller 100 outputs warning sound (such as beeps) to inform the user that the remaining battery capacity has become lower than the predetermined value (Step S4). Where the operation mode is not type A ("NO" in Step S3), the central processing controller 100 checks whether the present operation mode is either type B or type D (Step S5).

In the case where the operation mode is type B or D ("YES" in Step S5), the central processing controller 100 controls the radio communication device 107 to switch the communication mode from class 2 to class 3 (Step S6). In addition, the central processing controller 100 checks whether the operation mode is either type C or type D (Step S7). If this is the case ("YES" in Step S7), the central processing controller 100 controls the D/A conversion amplifier circuit 105 to turn off the Dolby system (Step S8).

If Step S7 determines that the operation mode is neither type C nor type D ("NO" in Step S7), the central processing controller 100 outputs a warning sound to inform the user that the remaining battery capacity has become lower than the predetermined value (Step S4).

As can be seen from the above, when the remaining battery capacity has become lower than the predetermined value, the headset 1 merely outputs a warning sound in the operation mode of type A, and not only outputs a warning sound but also switches communication modes in the operation mode of type B. In the operation mode of type C the headset 1 merely turns off the Dolby system, and in the operation mode of type D the headset not only turns off the Dolby system but also switches communication modes. Where the Dolby system is turned off, this acts as a warning to the user, and no particular warning sound is output.

As described above, when the remaining battery capacity becomes insufficient, the present invention can reduce the power consumption to lengthen the continuous operation time, on the basis of the user's request.

In the embodiment described above, there are four operation modes available, depending upon whether or not the communication mode is switched and whether or not the Dolby system is turned off. However, the present invention is not limited to this. For example, there may be only two operation modes determined depending upon whether or not the communication mode is switched. Likewise, there may be only two operation modes determined depending upon whether or not the Dolby system is turned off.

## Claims

1. An electronic apparatus which can be powered by a battery and is configured to perform radio communications with another apparatus, **characterized by** comprising:
battery capacity detection means (101) for detecting a remaining capacity of the battery;
radio signal transmission means (107) for transmitting a radio signal at one of a first output level and a second output level lower than the first output level; and
control means (100) for switching the output level of the radio signal transmitted by the radio signal transmission means from the first output level to the second output level, when the remaining capacity of the battery detected by the battery capacity detection means becomes lower than a predetermined value.

2. The electronic apparatus according to claim 1, **characterized by** further comprising:
setting means (103) for controlling whether or not the output level is switched based on the remaining capacity of the battery.

3. The electronic apparatus according to claim 2, **characterized in that** said control means includes means for outputting a warning sound when the control means detects that the remaining capacity of the battery becomes lower than the predetermined value in a state where the setting means is so set that the output level is not switched in accordance with the remaining capacity of the battery.

4. The electronic apparatus according to claim 1, **characterized in that** said radio signal transmission means performs radio communications conformable to Bluetooth(R) standards.

5. The electronic apparatus according to claim 4, **characterized in that** said radio signal transmission means uses class 2 when the radio signal is output at the first output level, and uses class 3 when the radio signal is output at the second output level.

6. The electronic apparatus according to claim 1, **characterized in that** said electronic apparatus further comprises a headset.

7. An electronic apparatus which can be powered by a battery and is configured to perform radio communications with another apparatus, **characterized by** comprising:
battery capacity detection means (101) for detecting a remaining capacity of the battery;
audio data reproduction means (105) for reproducing audio data with one of first sound quality and second sound quality lower than the first sound quality; and
control means (100) for switching the sound quality of the audio data reproduced by the audio data reproduction means from the first sound quality to the second sound quality, when the remaining capacity of the battery detected by the battery capacity detection means becomes lower than a predetermined value.

8. The electronic apparatus according to claim 7, **characterized by** further comprising:
setting means (103) for controlling whether or not the sound quality is switched based on the remaining capacity of the battery.

9. The electronic apparatus according to claim 8, **characterized in that** said control means includes means for outputting a warning sound when the control means detects that the remaining capacity of the battery becomes lower than the predetermined value in a state where the setting means is so set that the sound quality is not switched in accordance with the remaining capacity of the battery.

10. The electronic apparatus according to claim 7, **characterized in that** said audio data reproduction means uses a 5.1-channel mode when the audio data is reproduced with the first sound quality, and uses a 2-channel mode when the audio data is reproduced with the second sound quality.

11. The electronic apparatus according to claim 7, **characterized in that** said electronic apparatus further comprises a headset.

12. An electronic apparatus which can be powered by a battery and is configured to perform radio communications with another apparatus, **characterized by** comprising:
battery capacity detection means (101) for detecting a remaining capacity of the battery;
radio signal transmission means (107) for transmitting a radio signal at one of a first output level and a second output level lower than the first output level;
audio data reproduction means (105) for reproducing audio data with one of first sound quality and second sound quality lower than the first sound quality;
first control means (100) for switching the output level of the radio signal'transmitted by the radio signal transmission means from the first output level to the second output level, when the remaining capacity of the battery detected by the battery capacity detection means becomes lower than a predetermined value;
second control means (100) for switching the sound quality of the audio data reproduced by the audio data reproduction means from the first sound quality to the second sound quality, when the remaining capacity of the battery detected by the battery capacity detection means becomes lower than a predetermined value; and
setting means (103) for independently selecting at least one of the first and second control means.

13. A system control method for an electronic apparatus which can be driven by a battery and comprises a radio signal transmitter for transmitting a radio signal at one of a first output level and a second output level lower than the first output level, said system control method **characterized by** comprising the steps of:
detecting (S2) a remaining capacity of the battery; and
switching (S6) the output level of the radio signal transmitted by the radio signal transmitter from the first output level to the second output level, when the remaining capacity of the battery detected in the battery capacity detection step becomes lower than a predetermined value.

14. The system control method as recited in claim 13, the electronic apparatus further comprises an audio data reproduction device for reproducing audio data with one of first sound quality and second sound quality lower than the first sound quality, said system control method **characterized by** further comprising the steps of:
detecting a remaining capacity of the battery; and
switching the sound quality of the audio data reproduced by the audio data reproduction device from the first sound quality to the second sound quality, when the remaining capacity of the battery detected in the battery capacity detection step becomes lower than a predetermined value.

15. A system control method for an electronic apparatus which can be powered by a battery and comprises an audio data reproduction device for reproducing audio data with one of first sound quality and second sound quality lower than the first sound quality, said system control method **characterized by** comprising the steps of:
detecting (S2) a remaining capacity of the battery; and
switching (S6) the sound quality of the audio data reproduced by the audio data reproduction device from the first sound quality to the second sound quality, when the remaining capacity of the battery detected in the battery capacity detection step becomes lower than a predetermined value.
